# EUROPÄISCHE PATENTSCHRIFT

(11) **EP 1 909 713 B1**
(45) Veröffentlichungstag und Bekanntmachung des Hinweises auf die Patenterteilung: **27.03.2013**
(21) Anmeldenummer: 06760807.5
(22) Anmeldetag: 26.07.2006
(51) Int. Cl.: A61F 5/01

(54) **GELENKSORTHESE**
JOINT ORTHOSIS
ORTHÈSE POUR UNE ARTICULATION

(30) Priorität: 26.07.2005 AT 51005 U
(43) Veröffentlichungstag der Anmeldung: 16.04.2008
(73) Patentinhaber: Lohmann & Rauscher GmbH & Co. KG, 56567 Neuwied (DE)
(72) Erfinder: VUJANIC, Aleksandar, A-1200 Wien (AT); KLIMMER, Uwe, 94133 Röhrnbach (DE)
(74) Vertreter: Haffner und Keschmann Patentanwälte KG
(86) Internationale Anmeldenummer: PCT/AT2006/000320
(87) Internationale Veröffentlichungsnummer: WO 2007/012101

(56) Entgegenhaltungen:
- DE-U1- 29 705 405
- US-A- 4 655 201
- US-A- 5 222 733
- US-A- 5 628 722
- US-B1- 6 402 713

## Beschreibung

Die Erfindung betrifft eine Gelenksorthese für die Unterstützung eines zwischen zwei Gliedern von Gliedmaßen angeordneten Gelenks mit einem ersten Stützteil für die Anbringung an dem einen Glied und einem zweiten Stützteil zur Anbringung an dem anderen Glied, wobei jedes Stützteil wenigstens zwei an einander gegenüberliegenden Seiten angeordnete Stützschienen aufweist, welche relativ zu wenigstens einem zwischen dem ersten und dem zweiten Stützteil angeordneten Gelenkteil um eine Schwenkachse schwenkbar sind.

Eine solche Gelenksorthese ist beispielsweise der US-A-5222733 oder der US-A-4655201 zu entnehmen. Die Stützschienen des ersten Stützteils und die Stützschienen des zweiten Stützteils sind jeweils starr miteinander verbunden, sodass eine gleichsinnige Verschwenkung eines Stützschienenpaars erzwungen wird.

Derartige Orthesen werden zur Unterstützung von eingeschränkt funktionstüchtigen Körpergelenken verwendet. Man unterscheidet zwischen orthesen, die der Fixation von nicht reversiblen Formfehlern oder Deformation dienen, und Orthesen, die der Korrektur von Fehlstellungen, soweit es sich um reversible Haltunge- oder Stellungsfehler handelt, dienen. Orthesen werden häufig zur Stützung des Kniegelenks angewendet, wobei der Zweck darin liegt eine dauernde Instabilität des Kniegelenks von außen zu kompensieren oder eine frisch operierte Bandplastik vor zu frühzeitiger Belastung und Ruptur zu schützen. Dabei muss gleichzeitig in einem definierbaren Umfang die Beugung und Streckung des Kniegelenks freigegeben werden, um die äußerst wichtige frühfunktionelle Therapie zu ermöglichen.

Der Nachteil von herkömmlichen orthesen ist, dass die Kinematik der Orthese nicht immer mit der Kinematik des entsprechenden Gelenks übereinstimmt. Insbesondere im Fall von Knieorthesen stellt es ein weitestgehend ungelöstes Problem dar die Kinematik der Orthese an die äußerst komplexe und individuell unterschiedliche Kinematik des menschlichen Kniegelenks anzupassen. Es ist bekannt, dass die Momentandrehachse des Kniegelenks mit dem Beugewinkel wandert und durch den jeweilig aktuellen Kreuzungspunkt der beiden Kreuzbänder verläuft. Die Kurve, die dabei von der wandernden Momentandrehachse beschrieben wird, nennt man in der Literatur auch die Polkurve. Weicht die Polkurve der Orthese von der des Kniegelenks ab, hat man es mit einem überdefinierten System zu tun, in dem erhebliche Spannungen in den Kreuzbändern auftreten können. Dies kann zum Beispiel zu Lockerungen von Kreuzbandersatzplastiken führen, die eigentlich durch die Orthese geschützt und nicht gedehnt werden sollten. Zur Lösung dieses Problems ist beispielsweise aus der DE 29705405 U1 eine Kniegelenkorthese bekannt geworden, bei welcher die kinematische Halterung der Unterschenkelmanschette in jeder Winkelstellung des Gelenkscharniers einen eingebauten Freiheitsgrad der Verschiebung aufweist, deren Bezug auf den Schienbeinkopf hauptsächlich ventrodorsal gerichtet ist.

Eine derartige Ausbildung verbessert zwar die Kinematik der Kniegelenkorthese, jedoch werden auch Bewegungen zugelassen, welche physiologisch nicht vorgesehen sind, wodurch in gewissen Fällen ein instabil gewordenes Kniegelenk durch die Orthese nicht ausreichend stabilisiert werden kann. Beispielsweise kann eine Instabilität des Kniegelenks durch einen Riss des vorderen Kreuzbandes verursacht werden. Der Schlenbeinkopf hat in diesem Fall gegenüber dem Oberschenkel eine vermehrte pathologische Bewegungsfreiheit nach vorne, was eine Mehrbelastung der Menisken verursacht, welche diese pathologische Bewegung des Schienbeinkopfes zu bremsen versuchen. Somit entsteht nach einer Ruptur des vorderen Kreuzbandes eine veränderte Kinematik des Kniegelenks, welche nur zum Teil aktiv muskulär beeinflusst werden kann. Diese pathologische Bewegungsfreiheit des Schienbeinkopfes nach vorne, welche auch als "vordere Schublade" bezeichnet wird, soll durch eine Knieorthese ebenfalls eingeschränkt werden, sodass auch in dieser Hinsicht eine Stabilisierung des Kniegelenks erfolgt.

Die vorliegende Erfindung zielt daher darauf ab, eine Gelenksorthese zu schaffen, deren Kinematik weitestgehend jener des zu unterstützenden Gelenks, und insbesondere eines Kniegelenks, entspricht, wobei einerseits alle physiologisch vorgesehenen Bewegungsfreiheiten zugelassen werden sollen und daher insbesondere auch die Beugung des Kniegelenks und eine Rotation des Unterschenkels um dessen Längsachse relativ zum Oberschenkel bzw. bei Streckung des Knies die Rotation des Oberschenkels relativ zum Unterschenkel, wobei gleichzeitig pathologische Bewegungsfreiheiten, wie beispielsweise das Phänomen der "vorderen Schublade", wirksam unterbunden werden müssen.

Zur Lösung dieser Aufgabe ist die Gelenksorthese der eingangs genannten Art erfindungsgemäß derart weitergebildet, dass eine Steuervorrichtung zum Steuern der Schwenkbewegung der Stützschienen vorgesehen ist, sodass jeweils die an der einen Seite des ersten Stützteils angeordnete Stützschiene und die an der gegenüberliegenden Seite des zweiten Stützteils angeordnete Stützschiene zu gleichsinniger Schwenkbewegung gekoppelt sind, und dass die Stützschienen des ersten Stützteils und die Stützschienen des zweiten Stützteils jeweils mit einer Ober- bzw. Unterschenkelmanschette derart gekoppelt sind, dass eine Relativbewegung zwischen den Stützschienen und der Oberschenkel- bzw. Unterschenkelmanschette während einer Rotation des Unter- bzw. Oberschenkels um die Längsachse ermöglicht wird. Die Schwenkbewegung der einzelnen Stützschienen ist somit in einer weise zwangsgeführt bzw. gekoppelt, dass lediglich Schwenkbewegungen zugelassen werden, bei welchen jeweils die beiden im Bezug auf das Gelenk diametral gegenüberliegenden Stützschienen gleichsinnig verschwenkt werden. Der Erfindung liegt die Erkenntnis zur Grunde, dass bei den physiologisch zulässigen Bewegungen des Kniegelenks immer eine gleichsinnige Schwenkbewegung der im Bezug auf das Gelenk diametral gegenüberliegenden stützschienen zu beobachten ist. Beispielsweise ist im Fall des Kniegelenks zu beobachten, dass immer die außen am Oberschenkel und innen am Unterschenkel eines Beins anliegende Stützschiene bei zulässigen Bewegungsvorgängen gleichsinnig verschwenkt werden. Dasselbe gilt für die innen am Oberschenkel und die außen am Unterschenkel anliegende Stützschiene. Selbatverständlich ist dies bei der Beugung des Beins der Fall, wo die beiden oberen Stützschienen und die beiden unteren Stützschienen relativ zum Gelenkteil der Orthese nach hinten und somit gleichsinnig verschwenkt werden, womit auch die im Bezug auf das Kniegelenk diametral gegenüberliegenden Stützschienen gleichsinnig nach hinten verschwenkt werden. Bei einer Rotation des Unterschenkels um seine Längsachse relativ zum Oberschenkel ist zu beobachten, dass beispielsweise (d.h. abhängig von der Rotationsrichtung) die außen am Oberschenkel anliegende und die innen am Unterschenkel anliegende Stützschienen nach vorne und gleichzeitig die außen am Unterschenkel und innen am Oberschenkel anliegende stützschiene relativ zum Gelenkteil nach hinten verschwenkt werden. Auch eine derartige Bewegung wird somit durch die erfindungsgemäße Zwangskoppelung der einzelnen stützschienen zugelassen. Anders verhält es sich jedoch bei der sogenannten "vorderen Schublade", bei welcher eine Bewegungsfreiheit des Schienbeinkopfes nach vorne herrscht. Bei einer derartigen Bewegung ist zu beobachten, dass die am Oberschenkel anliegenden Stützschienen relativ zum Gelenkteil nach vorne verschwenkt und die am Unterschenkels anliegenden Stützschienen relativ zum Gelenkteil nach hinten verschwenkt werden, sodass hier eine gegensinnige Schwenkbewegung stattfindet. Eine derartige gegensinnige Schwenkbewegung wird durch die erfindungegemäße Ausbildung nicht zugelassen, sodass auch die sogenannte "vordere Schublade" wirksam unterbunden wird. Eine besonders wirksame Abstützung des Gelenks gelingt gemäß einer bevorzugten Ausbildung dann, wenn die Kopplung der im Bezug auf das Gelenk diametral gegenüberliegenden Stützschienen nicht nur in Bezug auf die Richtung der Schwenkbewegung, sondern auch in Bezug auf die Größe des Schwenkwinkels erfolgt. In diesem Fall ist die Steuervorrichtung derart ausgebildet, dass jeweils die an der einen Seite des ersten Stützteils angeordnete Stützschiene und die an der gegenüberliegenden Seite des zweiten Stützteils angeordnete Stützschiene zu gleichsinniger Schwenkbewegung um den gleichen Schwenkwinkel gekoppelt sind.

Die Kopplung der betreffenden Stützschienenschwenkbewegung kann auf vielfältige Art und Weise erfolgen. Beispielsweise kann jeder einzelnen Stützschiene eine Vorrichtung zum Freigeben oder Blockieren der Schwenkbewegung zugeordnet sein, wobei die Vorrichtungen drahtlos oder drahtgebunden miteinander in Verbindung stehen und von einer zentralen Steuervorrichtung derart gesteuert werden, dass die Freigabe der Schwenkbewegung nur in diejenige Richtung erfolgt, wie sie der Schwenkbewegung der diametral gegenüberliegenden schiene entspricht. Die jeweils diametral gegenüberliegenden Stützschienen können aber auch unmittelbar hydraulisch passiv oder aktiv gekoppelt werden. Am zuverlässigsten ist jedoch eine unmittelbare mechanische Koppelung der betreffenden Stützschienen und es ist daher gemäße einer bevorzugten Ausbildung vorgesehen, dass die Steuervorrichtung einen an der an der einen Seite des ersten stützteils angeordneten Stützschiene und der an der gegenüberliegenden Seite des zweiten Stützteils angeordneten Stützschiene angreifenden Seilzug umfasst. Der Seilzug kann hierbei bevorzugt von einem umlaufenden Steuerseil gebildet sein, welches je einen Mitnehmer für die beiden miteinander zu koppelnden Stützschienen aufweist, wobei die Mitnehmer in einem Langloch der jeweiligen Stützschienen verschieblich gelagert sind. Durch direkte mechanische Kopplung mittels des Steuerseils wird sichergestellt, dass die miteinander gekoppelten stützschienen jeweils um denselben Winkel verschwenkt werden. Der maximale Schwenkweg wird hierbei bevorzugt dadurch begrenzt, dass das Gelenkteil entsprechende Anschläge aufweist, welche mit Dämpfungselementen versehen sind, sodass entsprechend der sonst bei unversehrten natürlichen Gelenken vorgesehenen Dämpfung durch die Bänderdehnung auch durch die Orthese ein gedämpfter Anschlag gewährleistet wird.

Um die Kinematik der Orthese besser an die jeweils gewünschte therapeutische Verwendung anpassen zu können, ist bevorzugt jede Stützschienen um eine gesonderte Schwenkachse schwenkbar gelagert. Dadurch wird die Voraussetzung geschaffen durch entsprechende Beeinflussung der Schwenkachsenposition eine der natürlichen Bewegung des Gelenks möglichst angepasste Kinematik zu erreichen. Bevorzugt ist hierbei vorgesehen, dass die Schenkachse entlang einer Führungsbahn verschieblich angeordnet ist, wodurch eine physiologische Bewegungskombination aus Rollen und Gleiten ermöglicht wird, wie es der natürlichen Kinematik z.B. des Kniegelenks entspricht. Besonders bevorzugt ist in diesem Zusammenhang eine Ausbildung, bei welcher die Führungsbahn für die Schwenkachse gekrümmt ausgebildet ist, sodass die Polkurve des Gelenks präzise nachgebildet sein kann. Im Allgemeinen kann die Führungsbahn beispielsweise als Langloch im Gelenkteil der Orthese ausgebildet sein und es kann eine kontrollierte Verschiebung der Schwenkachse innerhalb des Langlochs vorgenommen werden, um die für einen bestimmten therapeutischen Zweck optimale Kombination aus Abrollen und Gleiten zu erreichen.

Die Verstellung der Position der Schwenkachse kann hierbei einem vordefinierten Bewegungsablauf folgen. Bevorzugt ist jedoch vorgesehen, dass die Position der Schwenkachse und/oder die Position bzw. Ausrichtung der Führungsbahn in Abhängigkeit vom Schwenkwinkel der Stützschiene veränderbar ist. In konstruktiver Hinsicht kann eine derartige Veränderung der Schwenkachsenposition bzw. der Führungsbahn derart erfolgen, dass das Steuerseil einen weiteren Mitnehmer aufweist, welcher mit einem Anschlag des die Führungsbahn tragenden Bauteils zur Verstellung desselben in Abhängigkeit vom Schwenkwinkel der Stützschiene zusammenwirkt. Durch eine geeignete Führung der Schwenkachsenposition kann die Polkurve des Gelenks sehr genau nachgebildet werden.

Eine weitere Möglichkeit der Anpassung der Kinematik der Orthese besteht bevorzugt darin, dass Mittel zur Einstellung des Abstands zwischen den Führungsbahnen für die Schwenkachsen der Stützschienen des ersten Stützteils und den Führungsbahnen für die Schwenkachsen der Stützschienen des zweiten Stützteils vorgesehen sind. Auch hier kann die Einstellung entweder fix vorgenommen werden oder in Abhängigkeit vom Schwenkwinkel der Stützschienen vorgenommen werden, wobei letztere Alternative in therapeutischer Hinsicht bevorzugt ist. Das Steuerseil kann hierzu ein Nockenelement aufweisen, welches mit einem zwischen den die Führungsbahnen tragenden Bauteilen wirksamen Abstandhalter zur Verschiebung desselben in Abhängigkeit vom Schwenkwinkel der Stützschiene zusammenwirkt.

Um die Kinematik der Orthese besser steuern und kontrollieren zu können, ist die Ausbildung bevorzugt derart weitergebildet, dass wenigstens ein Sensor zur Erfassung der Position und/oder des Schwenkwinkels der Stützschienen und ein Speicher für die vom Sensor erfassten Daten vorgesehen ist. Wenn Positions- bzw. Winkeldaten der Stützschienen über einen längeren Zeitraum erfasst und abgespeichert werden, können die gewonnenen Daten für Bewegungsanalysen des Patienten verwendet werden, um Rückschlüsse auf die Wirksamkeit und Funktionsfähigkeit der Orthese zu gewinnen und gegebenenfalls Anpassungen in der Kinematik der Orthese vornehmen zu können.

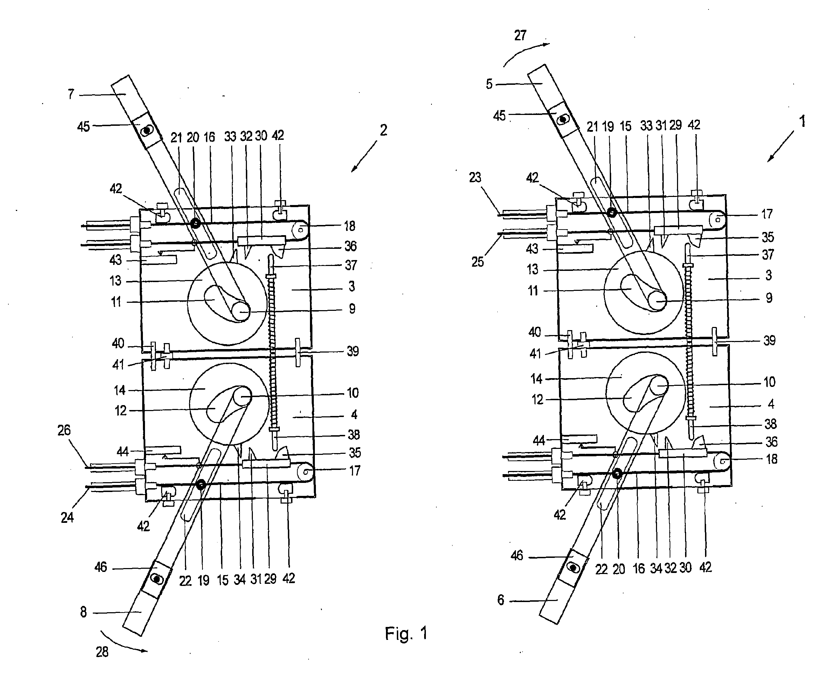

Die Erfindung wird nachfolgend anhand eines in der Zeichnung schematisch dargestellten Ausführungsbeispieles näher erläutert. In dieser ist der Aufbau einer Gelenksorthese, wie sie insbesondere für ein Kniegelenk verwendet werden kann, schematisch dargestellt. Der an der Außenseite des rechten Kniegelenks anzubringende Teil der Gelenksorthese ist mit 1 bezeichnet, der an der Innenseite anzubringende Teil ist mit 2 bezeichnet, wobei beide Teile gleich aufgebaut sein können. Die Gelenksorthesenteile 1 und 2 weisen jeweils zwei Gelenkteile 3 und 4 auf, in welchen Stützschienen 5, 6, 7 und 8 gelenkig gelagert sind. In der Regel sind die an der Außenseite des Oberschenkels anliegende Stützschiene 5 und die an der Innenseite des Oberschenkels anliegende Stützschiene 7 mit einer Oberschenkelmanschette und die an den gegenüberliegenden Seiten des Unterschenkels anliegenden Stützschienen, nämlich die an der Außenseite des Unterschenkels anliegende Stützschiene 6 und die an der Innenseite des Unterschenkels anliegende Stützschiene 8, mit einer Unterschenkelmanschette gekoppelt. Die Kopplung ist dabei derart ausgeführt, dass eine Relativbewegung zwischen den Stützschienen und der Oberschenkel- bzw. Unterschenkelmanschette während einer Rotation des Unter- bzw. Oberschenkels um die Längsachse ermöglicht wird. Die Stützschienen 5, 6, 7 und 8 sind um Schwenkachsen 9 bzw. 10 schwenkbar gelagert, wobei die Schwenkachsen in einer von einem Langloch 11 bzw. 12 gebildeten Führungsbahn verschieblich geführt werden können. Das Langloch 11 bzw. 12 ist in einem Kulissenbauteil 13 bzw. 14 ausgebildet, welches, wie nachfolgenden noch erörtert werden wird, verstellbar angeordnet ist.

In den Gelenkteilen 3 und 4 ist jeweils ein Teil eines Seilzugs ersichtlich, welcher ein Steuerseil 15 bzw. 16 aufweist. Die Steuerseile 15 und 16 sind jeweils um eine Umlenkrolle 17 bzw. 18 geführt und weisen Mitnehmer 19 bzw. 20 auf, welche in einem Langloch 21 bzw. 22 der Stützschienen 5, 6, 7 und 8 geführt sind. Die Schwenkbewegung der an der Außenseite eines Beins angeordneten Stützschiene 5 ist nun mit der Schwenkbewegung einer an der Innenseite des Beins angeordneten Stützschiene 8 derart gekoppelt, dass die beiden Stützschienen 5 und 8 eine gleichsinnige Schwenkbewegung um den gleichen Winkel relativ zu dem Gelenkteil 3 bzw. 4 ausführen. Das Steuerseil 15 ist zu diesem Zweck derart geführt, dass der aus dem Gelenkteil 3 herausgeführte Abschnitt 23 des Seils mit dem aus dem Gelenkteil 4 herausgeführten Abschnitt 26 des Seils und der aus dem Gelenkteil 3 herausgeführte Abschnitt 25 des Seils mit dem aus dem Gelenkteil 4 herausgeführten Abschnitt 24 des Seils verbunden ist. Das Steuerseil 15 ist somit zwischen dem Gelenkteil 3 und dem Gelenkteil 4 parallel geführt, sodass beispielsweise bei einer Schwenkbewegung der Stützschiene 5 im Sinne des Pfeils 27 zwangsweise eine Schwenkbewegung der Stützschiene 8 im Sinne des Pfeils 28 erfolgt und somit beide Stützschienen 5 und 8 eine gleichsinnige Schwenkbewegung nach vorne ausführen. In gleicher Weise ist das Steuerseil 16 zwischen dem Gelenkteil 3 und dem Gelenkteil 4 parallel geführt.

Die Steuerseile 15 und 16 tragen weiters jeweils einen weiteren Mitnehmer 29 bzw. 30, welcher einen Anschlag 31 bzw. 32 trägt, welcher mit einem Gegenanschlag 33 bzw. 34 des Kulissenbauteils 13 bzw. 14 zusammenwirkt. Dadurch kann eine Verstellung des Kulissenbauteil 13 bzw. 14 und somit eine Verstellung der vom Langloch 11 bzw. 12 gebildeten Führungsbahn für die Schwenkachse 9 bzw. 10 in Abhängigkeit vom Schwenkwinkel erfolgen.

Die weiteren Mitnehmer 29 und 30 weisen weiters ein Nockenelement 35 bzw. 36 auf, welches mit einem Abstandsstift 37 bzw. 38 zusammenwirkt, wobei durch Verschiebung des Abstandsstifts 37 bzw. 38 der Abstand zwischen den Gelenkteilen 3 und 4 verändert werden kann. Die gegenseitige Ausrichtung der Gelenkteile 3 und 4 wird durch die Positionsstifte 39 und 40 sichergestellt. Weiters ist eine Abstandsschraube 41 vorgesehen.

Zur Begrenzung des Schwenkwinkels der Stützschienen 5, 6, 7 und 8 sind einstellbare Anschläge 42 vorgesehen, welche, wie bereits erwähnt, mit Dämpfungselementen versehen sein können, um einen gedämpften Anschlag und damit eine Schonung,des Gelenks zu erreichen. Die Einstellung der Position der Dämpfungselemente erfolgt mittels nicht näher dargestellten Stellgliedern. Weiters sind Positionssensoren 43 und 44 angeordnet, welche die Schwenkbewegung der Stützschienen 5, 6, 7 und 8 erfassen, welche mit einem nicht näher dargestellten Speicher für die erfassten Daten verbunden sind. Um auch eine Rotation um die Längsachse zulassen zu können, sind die Stützschienen 5, 6, 7 und 8 um ihre Längsachse drehbar gelagert, bzw. weisen einen Endabschnitt auf, der unter Zwischenschaltung eines einstellbaren Rotationsbegrenzers 45 bzw. 46 um die Längsachse drehbar ist, wobei in diesem Fall die Oberschenkel- bzw. Unterschenkelmanschette lediglich mit den rotierbaren Endabschnitten gekoppelt ist.

## Patentansprüche

1. Gelenksorthese für die Unterstützung eines zwischen zwei Gliedern von Gliedmaßen angeordneten Gelenks mit einem ersten Stützteil für die Anbringung an dem einen Glied und einem zweiten Stützteil zur Anbringung an dem anderen Glied, wobei jedes Stützteil wenigstens zwei an einander gegenüberliegenden seiten angeordnete Stützschienen aufweist, welche relativ zu wenigstens einem zwischen dem ersten und dem zweiten Stützteil angeordneten Gelenkteil um eine Schwenkachse schwenkbar sind, **dadurch gekennzeichnet, dass** eine Steuervorrichtung zum Steuern der Schwenkbewegung der Stützschienen (5,6,7,8) vorgesehen ist, sodass jeweils die an der einen Seite des ersten Stützteils angeordnete Stützschiene (5,7) und die an der gegenüberliegenden Seite des zweiten Stützteils angeordnete Stützschiene (8,6) zu gleichsinniger Schwenkbewegung gekoppelt sind, und dass die Stützschienen des ersten Stützteils und die Stützschienen des zweiten Stützteile jeweils mit einer Ober- bzw. Unterschenkelmanschette derart gekoppelt sind, dass eine Relativbewegung zwischen den Stützschienen und der Oberschenkel- bzw. Unterschenkelmanschette während einer Rotation des Unter- bzw. Oberschenkels um die Längsachse ermöglicht wird.

2. Gelenksorthese nach Anspruch 1, **dadurch gekennzeichnet, dass** die Steuervorrichtung derart ausgebildet ist, dass jeweils die an der einen Seite des ersten Stützteils angeordnete Stützschiene (5,7) und die an der gegenüberliegenden Seite des zweiten Stützteils angeordnete Stützschiene (8,6) zu gleichsinniger Schwenkbewegung um den gleichen Schwenkwinkel gekoppelt sind.

3. Gelenksorthese nach Anspruch 1 oder 2, **dadurch gekennzeichnet, dass** die Steuervorrichtung einen an der an der einen Seite des ersten Stützteils angeordneten Stützschiene (5,7) und der an der gegenüberliegenden Seite des zweiten Stützteils angeordneten Stützschiene (8,6) angreifenden Seilzug umfasst.

4. Gelenksorthese nach Anspruch 3, **dadurch gekennzeichnet, dass** der Seilzug von einem umlaufenden Steuerseil (15,16) gebildet ist, welches je einen Mitnehmer (19,20) für die beiden miteinander zu koppelnden Stützschienen (5,8;6,7) aufweist, wobei die Mitnehmer (19,20) in einem Langloch (21,22) der jeweiligen Stützschienen (5,6,7,8) verschieblich gelagert sind.

5. Gelenksorthese nach einem der Ansprüche 1 bis 4, **dadurch gekennzeichnet, dass** das Gelenkteil (3,4) einstellbare Anschläge (42) zur Begrenzung der Schwenkbewegung der Stützschienen (5,6,7,8) aufweist.

6. Gelenksorthese nach Anspruch 5, **dadurch gekennzeichnet, dass** die Anschläge (42) mit Dämpfungselementen versehen sind.

7. Gelenksorthese nach einem der Ansprüche 1 bis 6, **dadurch gekennzeichnet, dass** jede Stützschiene (5,6,7,8) um eine gesonderte Schwenkachse (9,10) schwenkbar gelagert ist.

8. Gelenksorthese nach einem der Ansprüche 1 bis 7, **dadurch gekennzeichnet, dass** die Schwenkachse (9,10) entlang einer Führungsbahn verschiebbar angeordnet ist.

9. Gelenksorthese nach Anspruch 8, **dadurch gekennzeichnet, dass** die Führungsbahn für die Schwenkachse (9,10) gekrümmt ausgebildet ist.

10. Gelenksorthese nach Anspruch 8 oder 9, **dadurch gekennzeichnet, dass** die Führungsbahn als Langloch (11,12) im Gelenkteil (3,4) ausgebildet ist.

11. Gelenksorthese nach einem der Ansprüche 1 bis 10, **dadurch gekennzeichnet, dass** die Position der Schwenkachse (9,10) und/oder die Position bzw. Ausrichtung der Führungsbahn in Abhängigkeit vom Schwenkwinkel der Stützschiene (5,6,7,8) veränderbar ist.

12. Gelenksorthese nach Anspruch 11, **dadurch gekennzeichnet, dass** das Steuerseil (15,16) einen weiteren Mitnehmer (29,30) aufweist, welcher mit einem Anschlag (33,34) des die Führungsbahn tragenden Bauteils (13,14) zur Verstellung desselben in Abhängigkeit vom Schwenkwinkel der Stützschiene (5,6,7,8) zusammenwirkt.

13. Gelenksorthese nach einem der Ansprüche 1 bis 12, **dadurch gekennzeichnet, dass** Mittel zur Einstellung des Abstands zwischen den Führungsbahnen für, die Schwenkachsen (9) der Stützschienen (5,7) des ersten Stützteils und den Führungsbahnen für die Schwenkachsen (10) der Stützschienen (6,8) des zweiten Stützteils vorgesehen sind.

14. Gelenksorthese nach Anspruch 13, **dadurch gekennzeichnet, dass** die Mittel zur Einstellung des Abstand in Abhängigkeit vom Schwenkwinkel der Stützschienen (5,6,7,8) ausgebildet sind.

15. Gelenksorthese nach Anspruch 14, **dadurch gekennzeichnet, dass** das Steuerseil (15,16) ein Nockenelement (35,36) aufweist, welches mit einem zwischen den die Führungsbahnen tragenden Bauteilen (13,14) wirksamen Abstandhalter (37,38) zur Verschiebung desselben in Abhängigkeit vom Schwenkwinkel der Stützschienen (5,6,7,8) zusammenwirkt.

16. Gelenksorthese nach einem der Ansprüche 1 bis 15, **dadurch gekennzeichnet, dass** wenigstens ein Sensor (43,44) zur Erfassung der Position und/oder des Schwenkwinkels der Stützschienen (5,6,7,8) und ein Speicher für die vom Sensor (43,44) erfassten Daten vorgesehen ist.

## Claims

1. Joint orthosis for supporting a joint arranged between two parts of limbs with a first supporting section for application to the one limb part and a second supporting section for application to the other limb part, whereby each supporting section has at least two supporting splints arranged on opposite sides which relative to at least one joint part arranged between the first and second support section are pivotable about a pivoting axis **characterised in that** a control device for controlling the pivoting movement of the supporting splints (5, 6, 7, 8) is provided so that the supporting splint (5, 7) arranged on one side of the first supporting device and the supporting splint (8, 6) arranged on the opposite side of the second supporting device are coupled to pivot in the same direction, and that the supporting splints of the first supporting device and the supporting splints of the second supporting device are each connected with an upper leg cuff or lower leg cuff respectively in such a way that a relative movement between the supporting splints and the upper leg cuff or lower leg cuff respectively during a rotation of the upper leg or lower leg respectively about the longitudinal axis is made possible.

2. Joint orthosis according to claim 1 **characterised in that** the control device is designed so that the supporting splint (5, 7) arranged on one side of the first supporting device and the supporting splint (8, 6) arranged on the opposite side of the second supporting device are coupled to pivot in the same direction about the same pivoting angle.

3. Joint orthosis according to claim 1 or 2 **characterised in that** the control device has a tackle in contact with the supporting splint (5, 7) arranged on one side of the first supporting device and the supporting splint (8, 6) arranged on the opposite side of the second supporting device.

4. Joint orthosis according to claim 3 **characterised in that** the tackle comprises a circumferential control cable (15, 16) which has a catch (19, 20) for the two supporting splints (5,8; 6,7) to be coupled to each other, whereby the catches (19, 20) are movably arranged in an elongated hole (21, 22) of the relevant supporting splints (5, 6, 7, 8).

5. Joint orthosis according to any one of claims 1 to 4 **characterised in that** the joint part (3, 4) has adjustable stops (42) for limiting the pivoting movement of the supporting splints (5, 6, 7, 8).

6. Joint orthosis according to claim 5 **characterised in that** the stops (42) are provided with cushioning elements.

7. Joint orthosis according to any one of claims 1 to 6 **characterised in that** each supporting splint (5, 6, 7, 8) is supported in a pivotal manner about a separate pivoting axis (9, 10).

8. Joint orthosis according to any one of claims 1 to 7 **characterised in that** the pivoting axis (9, 10) is movably arranged along a guide path.

9. Joint orthosis according to claim 8 **characterised in that** the guide path for the pivoting axis (9, 10) is curved.

10. Joint orthosis according to claim 8 or 9 **characterised in that** the guide path is in the form of an elongated hole (11, 12) in the joint part (3, 4).

11. Joint orthosis according to any one of claims 1 to 10 **characterised in that** the position of the pivoting axis (9, 10) and/or the position and alignment respectively of the guide path can be changed depending on the pivoting angle of the supporting splint (5, 6, 7, 8).

12. Joint orthosis according to claim 11 **characterised in that** the control cable (15, 16) has an additional catch (29, 30) which interacts with a stop (33, 34) of the component (13, 14) bearing the guide path in order to adjust it depending on the pivoting angle of the supporting splint (5, 6, 7, 8).

13. Joint orthosis according to any one of claims 1 to 12 **characterised in that** means are provided for adjusting the distance between the guide paths for the pivoting axis (9) of the supporting splints (5, 7) of the first support section and the guide paths for the pivoting axis (10) of the supporting splints (6, 8) of the second support section.

14. Joint orthosis according to claim 13 **characterised in that** the means for adjusting the distance are designed depending on the pivoting angle of the supporting splints (5, 6, 7, 8).

15. Joint orthosis according to claim 14 **characterised in that** the control cable (15, 16) has a cam element (35, 36) which interacts with a spacer (37, 38) acting between the components (13, 14) bearing the guide paths in order to move them depending on the pivoting angle of the supporting splints (5, 6, 7, 8).

16. Joint orthosis according to any one of claims 1 to 15 **characterised in that** at least one sensor (43, 44) for recording the position and/or the pivoting angle of the supporting splints (5, 6, 7, 8) and a memory device for the data recorded by the sensor (43, 44) are provided.

## Revendications

1. Orthèse d'articulation destinée à soutenir une articulation disposée entre deux parties de membre, comportant une première portion de soutien pour une application sur la première partie et une seconde portion de soutien pour une application sur l'autre partie, dans laquelle chaque portion de soutien comporte au moins deux attelles de soutien disposées sur des côtés opposés l'un à l'autre, qui peuvent pivoter par rapport à au moins une partie d'articulation disposée entre la première portion de soutien et la seconde portion de soutien autour d'un axe de pivotement, **caractérisée en ce qu'**un dispositif de commande est prévu pour commander le mouvement de pivotement des attelles de soutien (5, 6, 7, 8), de sorte que l'attelle de soutien (5, 7) disposée sur le premier côté de la première portion de soutien et l'attelle de soutien (8, 6) disposée sur le côté opposé de la seconde portion de soutien sont respectivement couplées pour un mouvement de pivotement dans le même sens, et **en ce que** les attelles de soutien de la première portion de soutien et les attelles de soutien de la seconde portion de soutien sont respectivement couplées à une manchette de haut ou de bas de jambe de telle sorte qu'un mouvement relatif entre les attelles de soutien et la manchette de haut ou de bas de jambe pendant une rotation du haut ou du bas de jambe est permis autour de l'axe longitudinal.

2. Orthèse d'articulation selon la revendication 1, **caractérisée en ce que** le dispositif de commande est conçu de telle sorte que l'attelle de soutien (5, 7) disposée sur le premier côté de la première portion de soutien et l'attelle de soutien (8, 6) disposée sur le coté opposé de la seconde portion de soutien sont respectivement couplées pour un mouvement de pivotement simultané dans le même sens environ du même angle de pivotement.

3. Orthèse d'articulation selon la revendication 1 ou 2, **caractérisée en ce que** le dispositif de commande inclut une commande par câble agissant sur l'attelle de soutien (5, 7) disposée sur le premier côté de la première portion de soutien et sur l'attelle de soutien (8, 6) disposée sur le côté opposé de la seconde portion de soutien.

4. Orthèse d'articulation selon la revendication 3, **caractérisée en ce que** la commande par câble est formée par un câble de commande circonférentiel (15, 16) qui comporte un élément d'entraînement (19, 20) pour les deux attelles de soutien (5, 8 ; 6, 7) devant être couplées l'une à l'autre, dans laquelle les éléments d'entraînement (19, 20) sont montés de manière mobile dans un trou oblong (21, 22) des attelles de soutien (5, 6, 7, 8) respectives.

5. Orthèse d'articulation selon l'une quelconque des revendications 1 à 4, **caractérisée en ce que** la partie d'articulation (3, 4) comporte des butées réglables (42) pour limiter le mouvement de pivotement des attelles de soutien (5, 6, 7, 8).

6. Orthèse d'articulation selon la revendication 5, **caractérisée en ce que** les butées (42) sont munies d'éléments d'amortissement.

7. Orthèse d'articulation selon l'une quelconque des revendications 1 à 6, **caractérisée en ce que** chaque attelle de soutien (5, 6, 7, 8) est montée de manière à pouvoir pivoter autour d'un axe de pivotement (9, 10) particulier.

8. Orthèse d'articulation selon l'une quelconque des revendications 1 à 7, **caractérisée en ce que** l'axe de pivotement (9, 10) est agencé de manière mobile le long d'une piste de guidage.

9. Orthèse d'articulation selon la revendication 8, **caractérisée en ce que** la piste de guidage est formée incurvée pour l'axe de pivotement (9, 10).

10. Orthèse d'articulation selon la revendication 8 ou 9, **caractérisée en ce que** la piste de guidage est configurée sous la forme d'un trou oblong (11, 12) dans la partie d'articulation (3, 4).

11. Orthèse d'articulation selon l'une quelconque des revendications 1 à 10, **caractérisée en ce que** la position de l'axe de pivotement (9, 10) et/ou la position ou l'orientation de la piste de guidage peut être changée en fonction de l'angle de pivotement de l'attelle de soutien (5, 6, 7, 8).

12. Orthèse d'articulation selon la revendication 11, **caractérisée en ce que** le câble de commande (15, 16) comporte un élément d'entraînement supplémentaire (29, 30) qui coopère avec une butée (33, 34) du composant (13, 14) supportant la piste de guidage afin de la régler en fonction de l'angle de pivotement de l'attelle de soutien (5, 6, 7, 8).

13. Orthèse d'articulation selon l'une quelconque des revendications 1 à 12, **caractérisée en ce que** des moyens sont prévus pour régler la distance entre les pistes de guidage pour les axes de pivotement (9) des attelles de soutien (5, 7) de la première portion de soutien et les pistes de guidage pour les axes de pivotement (10) des attelles de soutien (6, 8) de la seconde portion de soutien.

14. Orthèse d'articulation selon la revendication 13, **caractérisée en ce que** les moyens pour régler la distance sont conçus en fonction de l'angle de pivotement des attelles de soutien (5, 6, 7, 8).

15. Orthèse d'articulation selon la revendication 14, **caractérisée en ce que** le câble de commande (15, 16) comporte un élément de came (35, 36) qui coopère avec un élément d'écartement (37, 38) agissant entre les composants (13, 14) supportant les pistes de guidage afin de les déplacer en fonction de l'angle de pivotement des attelles de soutien (5, 6, 7, 8).

16. Orthèse d'articulation selon l'une quelconque des revendications 1 à 15, **caractérisée en ce qu'**au moins un capteur (43, 44) est prévu pour détecter la position et/ou l'angle de pivotement des attelles de soutien (5, 6, 7, 8), ainsi qu'une mémoire pour les données acquises par le capteur (43, 44).
